# EUROPEAN PATENT SPECIFICATION

(11) **EP 2 898 765 B1**
(45) Date of publication and mention of the grant of the patent: **23.08.2017**
(21) Application number: 14000307.0
(22) Date of filing: 28.01.2014
(51) Int. Cl.: A01F 25/20

(54) **Silage withdrawal gripper**
Silageentnahmegreifer
Pince de retrait d'ensilage

(43) Date of publication of application: 29.07.2015
(73) Proprietor: Overbeek, Jan Willem Josef, 7495 SP Ambt Delden (NL)
(72) Inventor: Overbeek, Jan Willem Josef, 7495 SP Ambt Delden (NL)
(74) Representative: Griebling, Onno

(56) References cited:
- DE-A1- 3 933 808
- DE-A1-102004 063 124
- GB-A- 955 047
- GB-A- 2 048 654
- US-A- 4 285 628

## Description

### FIELD OF THE INVENTION

The present invention relates in general to an apparatus for displacing bulk material such as grass.

### BACKGROUND OF THE INVENTION

In farming, it is customary to store large supplies of crop residues as animal fodder, indicated as "silage". Typically, this takes the shape of a hill of about 3 meters high and several tens of meters wide. The consistency depends on the source material, and may be granular or powdery but may also be grassy. In any case it is quite compacted after months of storage.

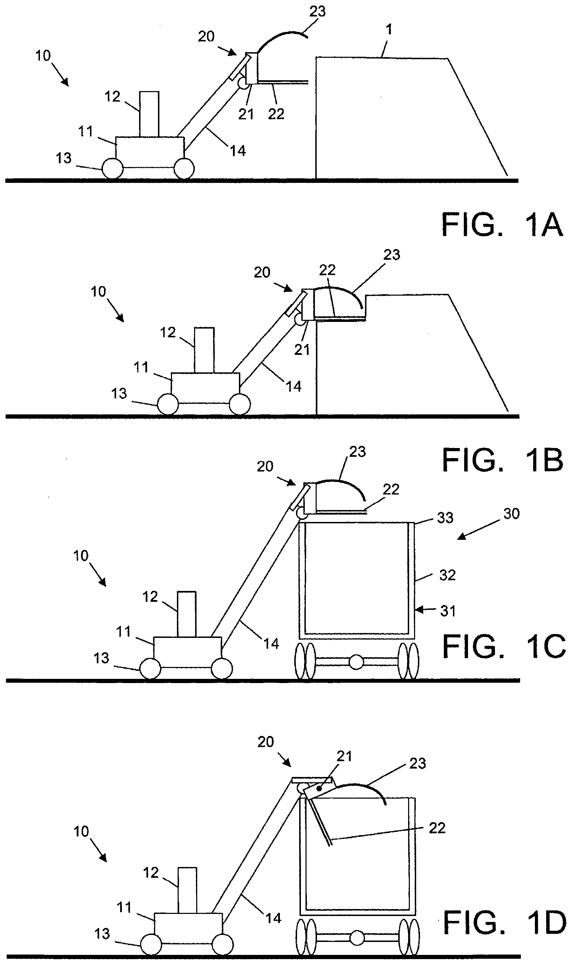

For transporting this material, it is loaded in lorries, using a lifting truck. The loading process is schematically illustrated in figure 1. A silage hill is indicated at reference numeral 1. Reference numeral 10 indicates a lifting truck, having a truck body 11 with a cabin 12 and wheels 13. At a front side, a lifting arm 14 is mounted to the truck body 11; this lifting arm typically is an articulated arm, but this is not shown for sake of simplicity. At its free end, directed away from the truck body 11, the lifting arm carries a silage withdrawal gripper 20. Typically, the lifting truck is a multiple purpose truck, and the silage withdrawal gripper 20 is fitted to the lifting arm 14 with a release coupling.

The silage withdrawal gripper 20 comprises three main components. A main frame 21 is coupled to the lifting arm 14. A silage carrier 22 is coupled to the main frame 21. A holder 23 or upper claw is coupled to the silage carrier 22. The silage carrier 22 can hinge with respect to the main frame 21. The holder 23 can hinge with respect to the silage carrier 22. The holder may for instance have the shape of a cover or inverted trough, or may have the shape of downward curved arms or teeth. The lifting truck is provided with hydraulic actuation members for actuating the hinging of the silage carrier 22 and the holder 23 and for holding the silage carrier 22 and the holder 23 in a certain hinged position. These hydraulic actuation members, which are not shown for sake of simplicity, are controlled by the driver of the lifting truck.

Depositing silage in a silage transport truck basically has the following four stages.

In a first stage, illustrated in figure 1A, the holder 23 is hinged to a raised position and the silage carrier 22 is hinged to a penetration position. The silage carrier 22 has a substantially flat carrier platform that projects away from the lifting arm 14. Proximate to the lifting arm 14, the silage carrier 22 may have a stopping wall, and at both sides the silage carrier 22 may have side walls, but these are not shown for sake of simplicity. In the penetration position, the carrier platform is directed horizontal. The driver now drives the lifting truck forward, so that the carrier platform penetrates the silage hill 1.

In a second stage, illustrated in figure 1B, the holder 23 is hinged downwards, so that it "bites" from above into the silage. A portion of silage is now captured between the holder 23 and the carrier platform.

In a third stage, the driver drives the lifting truck backwards, pulling the said portion of silage from the silage hill 1. With the silage withdrawal gripper 20 thus filled with silage, the lifting truck is driven to a transport truck 30, illustrated in figure 1C. For efficient transport, the transport truck 30 has a container 31 with high side walls 32, up to for instance 4 meters high. The lifting arm 14 is lifted and extended to reach high enough so that the silage carrier 22 is raised above the upper edge 33 of the container walls 32. The lifting truck is driven forward such that the silage carrier 22 is positioned above the open container 31.

In a fourth stage, illustrated in figure 1D, the silage is dumped into the container 31. To do this, the silage carrier 22 is hinged down to a dump position. In the dump position, the carrier platform is directed downwards at a steep angle, and ideally it is directed vertical. Further, in order to release the silage portion, the holder 23 is hinged upwards again.

When hinging the silage carrier 22 down to its dump position, a problem is that, since the holder 23 is hinged to an upper portion of the silage carrier 22, the holder 23 is moved forward, away from the truck body 11, but its orientation with respect to the silage carrier 22 remains the same and the silage carrier 22 does not let go of the silage. It is is necessary that the holder 23 is hinged up with respect to the silage carrier 22, and when this is done, the holder 23 is actually hinged forward with respect to the arm 14. This all means that the center of gravity of the silage withdrawal gripper 20 is displaced further away from the truck body 11, which may lead to an unstable situation and/or to reduced transportation capability of the silage withdrawal gripper 20.

### SUMMARY OF THE INVENTION

An object of the present invention is to provide a silage withdrawal gripper where this problem is eliminated or in any case reduced.

United States Patent 4.285.628 discloses a grapple system 10 for mounting on a tractor bucket. A bucket 11 is hingedly fixed to the arm 9 of a tractor 12, and a hydraulic cylinder 8 controls the hinge position of the bucket 11 with respect to the tractor arm. A seating rod 40 is welded on the top edge of the bucket 11. An attachment bracket 4 extends out from a rear portion 11 a of the bucket 11. The grapple system 10 comprises a linkage housing 13 that has a U-shaped support bar 34 firmly attached along a top edge of the linkage housing 13. The linkage housing 13 is releasably attached to the bucket 11 by the U-shaped support bar 34 engaging the seating rod 40 and by an attachment pin 5 engaging the attachment bracket 4. A tooth frame 20 with a series of teeth 15 is hinged to the linkage housing 13, at a position above the bucket 11. A hydraulic cylinder 16 is coupled between the linkage housing 13 and the tooth frame 20 for controlling the position of the tooth frame 20 with respect to the linkage housing 13. When the linkage housing 13 is mounted to the bucket 11, the linkage housing 13 and the bucket 11 move as one integral body. When the bucket is tilted down, the linkage housing 13 with the tooth frame 20 inevitably tilts forward. This known system has the disadvantages discussed in the introduction.

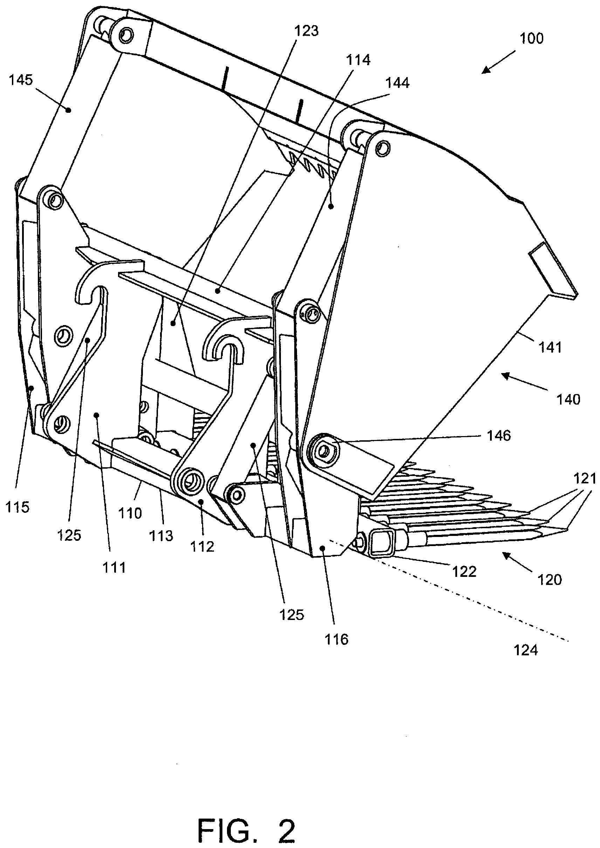

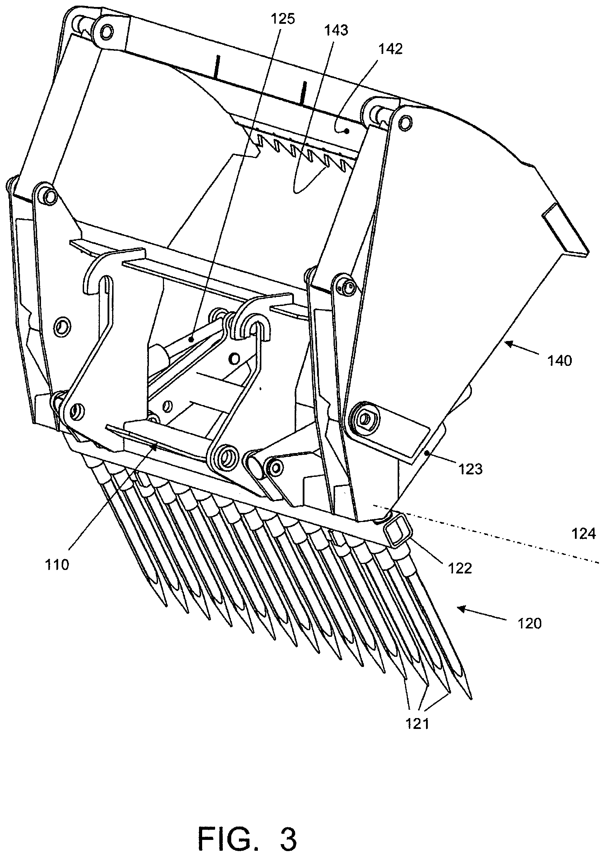

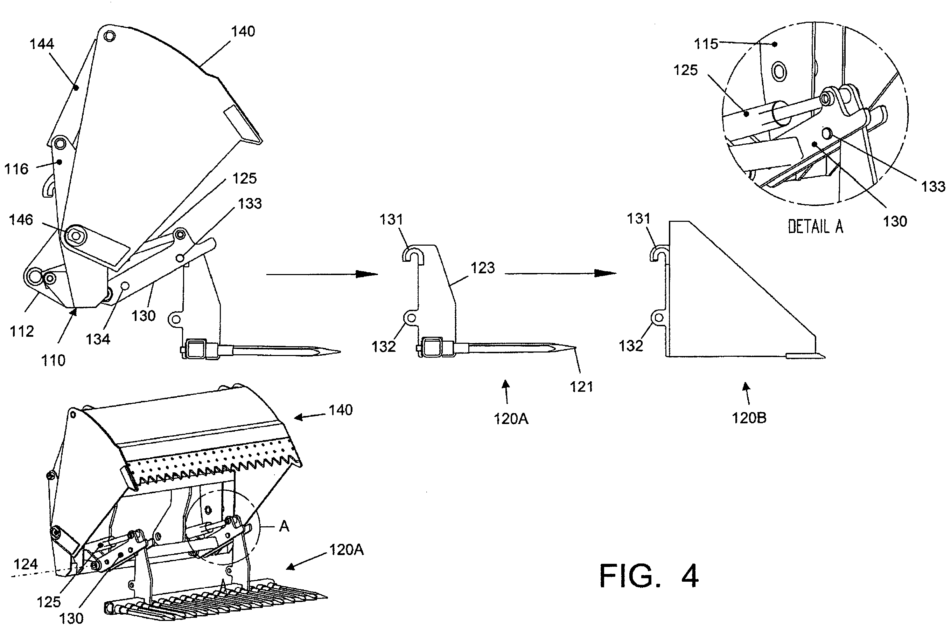

German Offenlegungsschrift 3933808 discloses an implement for attachment to a tractor. A carrier frame 22 is arranged for vertical displacement along guiding bars 14. A carrier 60, 48 is hinged to the carrier frame 22. A holder 38 with fingers 46 is hinged to the carrier frame 22 at a position above the carrier 60. A pair of hydraulic cylinders 62 control the position of the carrier 60 and the holder 38. The two hydraulic cylinders 62 are actuated simultaneously and are mounted in parallel between the carrier 60 and the holder 38. In the normal operative condition, illustrated in figures 1 and 2, an arresting bolt 58 fixes the carrier 60 in a fixed position to the carrier frame 22, and the holder 38 can be hinged up and down by actuating the two hydraulic cylinders 62. In another operative condition, illustrated in figures 3 and 4, an arresting bolt 64 fixes the holder 38 in a fixed position to the carrier frame 22, and the carrier 60 can be hinged up and down by actuating the two hydraulic cylinders 62. The holder 38 and the carrier 60 can not be hinged independently from each other; for bringing the implement in either one of said two operative conditions, the user must bring the corresponding arresting bolt in place.

British Patent 955.047 discloses an implement for attachment to a tractor. A main frame 3 is integrally connected to a lifting arm 1. A fork-type silage carrier 8 with prongs 10 and a backplate 11 is hinged to the main frame 3. Hinging the carrier forward/down is done by gravity; a manually operated lever/catch arrangement 17, 16, 15, 14, 12, 13 selectively prevents or allows the carrier to hinge forward/down. A holder 18, 19 is hinged to the carrier 8 at a position above the hinge axis 9 of the carrier. A cylinder-type actuator 20 is mounted between the carrier 8 and the holder 18 for controlling the hinge position of the holder 18 with respect to the carrier 8. When the carrier 8 is tilted down, the holder 18, 19 inevitably tilts forward. This known system has the disadvantages discussed in the introduction.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
figures 1A-1D schematically illustrate four stages of a silage withdrawal procedure;
figure 2 schematically shows a perspective view of an embodiment of a silage withdrawal gripper according to the present invention an a penetration condition;
figure 3 is a view comparable to figure 2, with the silage withdrawal gripper in a dump condition;
figure 4 illustrates quick-coupling of different types of silage carrier;
figure 5 is a view comparable to figure 3, with the silage withdrawal gripper having a plate-type silage carrier;
figures 6A-6D schematically illustrate four stages of a silage withdrawal procedure with the silage withdrawal gripper according to the present invention.

### DETAILED DESCRIPTION OF THE INVENTION

Figure 2 schematically shows a perspective view of a silage withdrawal gripper 100 according to the present invention, seen from behind. The silage withdrawal gripper 100 comprises a main fraim 110, which includes quick-coupling connector arms 111, 112 for coupling the main fraim 110 to the lifting arm of a lifting truck (not shown).

The silage withdrawal gripper 100 comprises a silage carrier 120 having a carrier platform that in this embodiment is shaped as a fork with a plurality of parallel spikes 121 mounted on a common spike support beam 122. In an alternative embodiment, the fork may be replaced by a flat plate.

At its sides, at a position proximate the main fraim 110, the silage carrier 120 has uprights 123 that extend substantially perpendicular with respect to the carrier platform. Thus, in a side view, the silage carrier 120 has a contour of a letter L lying down. The silage carrier 120 is hinged to the main fraim 110. The hinge axis 124 is located in the plane of or close to the plane of the carrier platform. For actuating the hinge movement of the silage carrier 120, extendable actuators 125 have one end connected to the main frame 110 and have their opposite ends connected to the upper ends of the uprights 123, respectively. The extendable actuators 125 may for instance be implemented as hydraulic pistons. In figure 2, the pistons 125 are in a withdrawn condition and the silage carrier 120 is in its penetration position. Figure 3 is a view comparable to figure 2, but now the pistons 125 are in an extended condition and the silage carrier 120 is in its dump position.

Depending on the consistency of the silage, one may choose to use a fork-type carrier platform or a plate-type carrier platform. If the silage has the constistency of compacted grass or maize cuttings, for instance, one would prefer to use a fork-type carrier platform. If the silage has the constistency of powder, one would prefer to use a plate-type carrier platform. This would imply that one would need to have two silage carriers of different type. According to the present invention, this is avoided if the silage withdrawal gripper 100 has a main frame 110 and a secundary frame 130, wherein the secundary frame 130 is hinged to the main frame 110 and the hinge actuators 125 engage the secundary frame 130, while the silage carrier 120 is coupled to the secundary frame 130. This is more clearly illustrated in figure 4, which shows a side view and a perspective view from the front. The silage carrier 120 is provided with quick-fitting coupling members 131, 132 that cooperate with complementary coupling members 133, 134 of the secundary frame 130. At the upper ends of the uprights 123, a bracket 131 with inverted U-shape is mounted, which can be laid as a hook on a support member 133, for instance a horizontal pin, of the secundary frame 130. When the lifting arm 14 of the truck is now lifted, the silage carrier 120 would be suspended from these support members 133 and could hinge with respect to these support members 133. By lifting the secundary frame 130, that is hinged at its underside, the silage carrier 120 would effectively hinge toward the secundary frame 130. At a lower position, the uprights 123 are provided with eyes 132 that can come into alignment with holes 134 of the secundary frame 130. Then, a latch pen (not shown) is pushed into the hole 134 and eye 132 to secure the silage carrier 120 to the secundary frame 130. The silage carrier 120 will now move as one whole with the secundary frame 130.

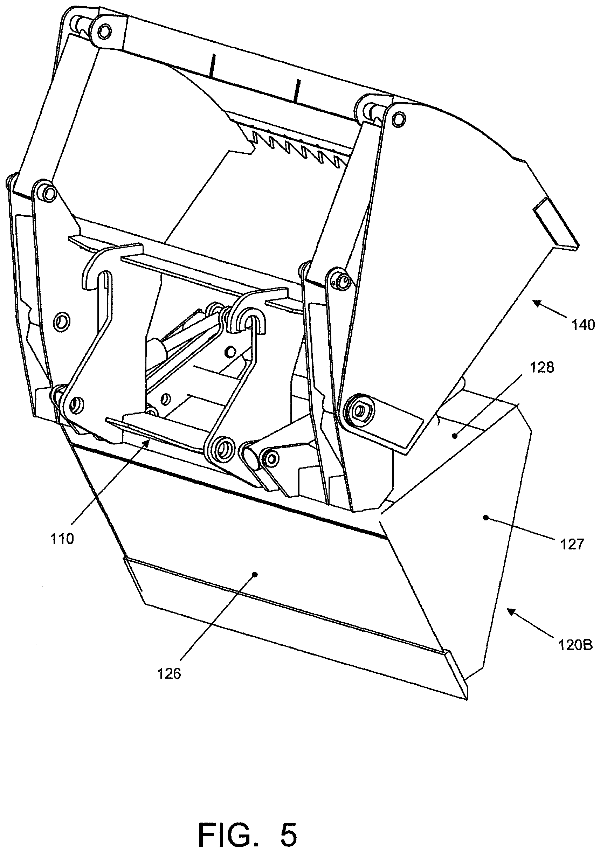

It should be clear that it is now easily possible to exchange a silage carrier 120A of one type (fork) for a silage carrier 120B of another type (plate). Figure 5 is a view comparable to figure 3, but now the silage carrier has a carrier platform in the form of a plate 126, and further the silage carrier comprises side walls 127 and a rear wall 128.

According to the invention, the silage withdrawal gripper 100 comprises a holder 140 or upper claw that is hingedly coupled to the main frame 110. In the embodiment shown, the main frame 110 has a rectangular shape, with a lower horizontal frame beam 113, an upper horizontal frame beam 114, and two vertical frame posts 115, 116, which posts in the embodiment shown are implemented as double plates. The holder 140 has side plates 141 that are hinged to the vertical frame posts 115, 116 at hinge points 146 positioned between the horizontal frame beams 113, 114. The holder 140 has a front plate 142 that at its lower end is provided with cutting teeth 143. Extendable actuators 144, 145, typically hydraulic pistons, have one end coupled to an upper end of the respective vertical frame posts 115, 116, and have their other ends coupled to the side plates 141, preferably close to a corner joint with the front plate 142 for increased stability.

In figure 2, the actuators 144, 145 are in their withdrawn condition and the holders 140 is in its raised condition. By expanding the actuators 144, 145, the holders 140 hinges downwards and the front plate 142 with the cutting teeth 143 can bite into the silage.

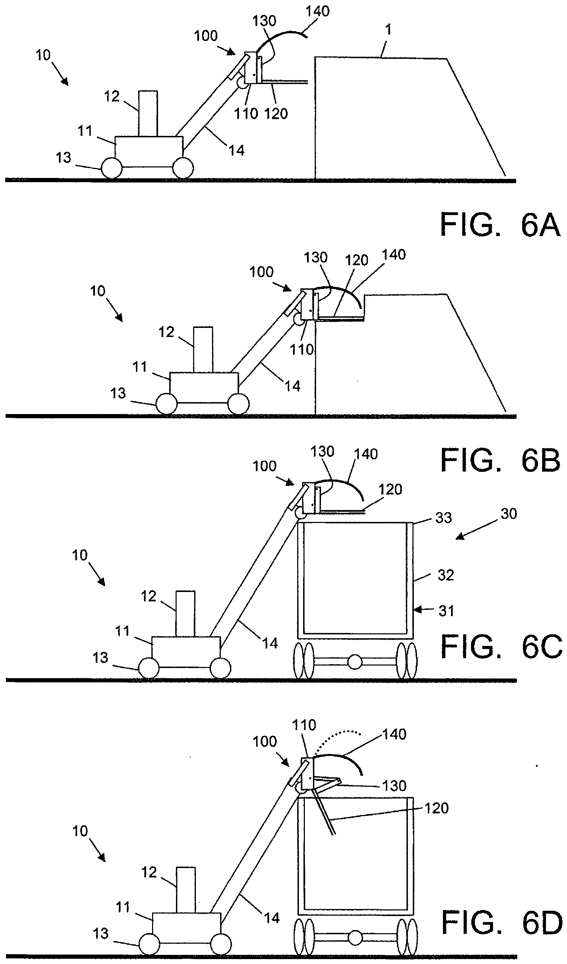

Figures 6A-6D are figures comparable to figures 1A-1D, respectively, showing the operation of the gripper according to the present invention. In figure 6A, the lifting truck 10 approaches the silage hill 1. In figure 6B, the silage carrier 120 has penetrated the silage hill 1 and the upper claw 140 has been hinged down. In figure 6C, the lifting truck 10 has lifted the silage withdrawal gripper 100 to a position above a container truck 30. In the fourth stage, illustrated in figure 6D, the silage is dumped into the container 31. To do this, the silage carrier 120 is hinged down to a dump position by hinging the secundary frame 130 with respect to the main frame 110. The main frame 110, however, maintains its orientation with respect to the arm 14. Consequently, the upper claw 140, which is hinged with respect to the main frame 110, maintains its position, and effectively releases the silage portion clamped between the silage carrier 120 and the upper claw 140. Nevertheless, if desired, the upper claw 140 may be hinged up, as shown in dotted line in figure 6D. An important advantage is that the center of gravity of the silage withdrawal gripper 100 is not displaced away from the truck body 11.

It should be clear to a person skilled in the art that the present invention is not limited to the exemplary embodiments discussed above, but that several variations and modifications are possible within the protective scope of the invention as defined in the appending claims. Even if certain features are recited in different dependent claims, the present invention also relates to an embodiment comprising these features in common. Any reference signs in a claim should not be construed as limiting the scope of that claim.

## Claims

1. Silage withdrawal gripper (100), comprising:
a main frame (110), adapted for coupling to a lifting arm of a lifting truck;
a silage carrier (120) hingedly connected to the main frame (110) with a substantially horizontal hinge axis (124); **characterised in that** the gripper further comprises at least one controllable carrier actuator (125) coupled between the silage carrier (120) and the main frame (110) for controlling the hinge position of the silage carrier (120) with respect to the main frame (110);
a hingeable holder (140) adapted to cooperate with the silage carrier (120) for gripping and holding silage; wherein the holder (140) is hingedly connected (146) to the main frame (110), at a position above the hinge axis (124) of the silage carrier (120);
and that the silage withdrawal gripper (100) further comprises at least one controllable holder actuator (144,145) coupled between the holder (140) and the main frame (110) for controlling the hinge position of the holder (140) with respect to the main frame (110).

2. Silage withdrawal gripper (100), comprising:
a main frame (110), adapted for coupling to a lifting arm of a lifting truck;
a secondary frame (130) hingedly connected to the main frame (110) with a substantially horizontal hinge axis (124), provided with carrier coupling means (133, 134) for coupling with a silage carrier (120A; 120B); **characterised in that** the gripper further comprises at least one controllable carrier actuator (125) coupled between the silage carrier (120) and the main frame (110**)** for controlling the hinge position of the secondary frame (130) with respect to the main frame (110);
a silage carrier (120A; 120B), provided with frame coupling means (131, 132) for coupling with the carrier coupling means (133, 134) of the secondary frame (130);
a hingeable holder (140) adapted to cooperate with the silage carrier (120A; 120B) for gripping and holding silage; wherein the holder (140) is hingedly connected (146) to the main frame (110), at a position above the hinge axis (124) of the secondary frame (130);
and that the silage withdrawal gripper (100) further comprises at least one controllable holder actuator (144, 145) coupled between the holder (140) and the main frame (110) for controlling the hinge position of the holder (140) with respect to the main frame (110).

3. Silage withdrawal gripper according to claim 2, further comprising:
at least two silage carriers (120A; 120B) of mutually different type, each provided with frame coupling means (131, 132) for exchangeable coupling with the carrier coupling means (133, 134) of the secondary frame (130).

4. Silage withdrawal gripper according to claim 2 or 3, wherein the frame coupling means (131, 132) are quick-release coupling means.

5. Silage withdrawal gripper according to claim 4, wherein the frame coupling means comprise at least one bracket (131) with inverted U-shape and at least one eye (132).

6. Silage withdrawal apparatus, comprising a lifting truck (10) with a lifting arm (14) and a silage withdrawal gripper according to any of claims 1-5.

## Patentansprüche

1. Silage-Entnahme-Greifer (100), enthaltend:
einen Hauptrahmen (110), geeignet zur Ankopplung an einen Hebearm eines Hubwagens;
einen Silageträger (120) schwenkbar verbunden mit dem Hauptrahmen (110) mit einer im Wesentlichen horizontalen Schwenkachse (124);
**dadurch gekennzeichnet, dass** der Greifer ferner wenigstens einen steuerbaren Trägerantrieb (125) enthält, befestigt zwischen dem Silageträger (120) und dem Hauptrahmen (110) zur Kontrolle der Schwenkposition des Silageträgers (120) bezüglich des Hauptrahmens (110);
eine schwenkbare Halterung (140) geeignet um mit dem Silageträger (120) zum Greifen und Halten von Silage zusammenzuarbeiten;
wobei die Halterung (140) schwenkbar verbunden (146) ist mit dem Hauptrahmen (110) an einer Position oberhalb der Schwenkachse (124) des Silageträgers (120);
und dass der Silage-Entnahme-Greifer (100) ferner wenigstens einen steuerbaren Halterungsantrieb (144, 145) enthält, befestigt zwischen der Halterung (140) und dem Hauptrahmen (110) zur Kontrolle der Schwenkposition der Halterung (140) bezüglich des Hauptrahmens (110).

2. Silage-Entnahme-Greifer (100), enthaltend:
einen Hauptrahmen (110), geeignet zur Befestigung an einen Hebearm eines Hubwagens;
einen zweiten Rahmen (130) schwenkbar verbunden mit dem Hauptrahmen (110) mit einer im Wesentlichen horizontalen Schwenkachse (124), ausgestattet mit Träger-Verbindungsmitteln (133, 134) zur Kopplung mit einem Silageträger (120A, 120B);
**dadurch gekennzeichnet, dass** der Greifer ferner wenigstens einen steuerbaren Trägerantrieb (125) enthält, befestigt zwischen dem Silageträger (120) und dem Hauptrahmen (110) zur Kontrolle der Schwenkposition des zweiten Rahmens (130) bezüglich des Hauptrahmens (110);
einen Silageträger (120A, 120B) ausgestattet mit Rahmen-Verbindungsmitteln (131, 132) zur Kopplung mit den Träger-Verbindungsmitteln (133, 134) des zweiten Rahmens (130);
eine schwenkbare Halterung (140) geeignet um mit dem Silageträger (120A, 120B) zum Greifen und Halten von Silage zusammenzuarbeiten;
wobei die Halterung (140) schwenkbar verbunden ist (146) mit dem Hauptrahmen (110) an einer Position oberhalb der Schwenkachse (124) des zweiten Rahmens (130);
und dass der Silage-Entnahme-Greifer (100) ferner wenigstens einen steuerbaren Halterungsantrieb (144, 145) enthält, befestigt zwischen der Halterung (140) und dem Hauptrahmen (110) zur Kontrolle der Schwenkposition der Halterung (140) bezüglich des Hauptrahmens (110).

3. Silage-Entnahme-Greifer gemäß Anspruch 2, ferner enthaltend:
wenigstens zwei Silageträger (120A, 120B) einer jeweils unterschiedlichen Art, jeweils ausgestattet mit Rahmen-Verbindungsmitteln (131, 132) zur austauschbaren Kopplung mit den Träger-Verbindungsmitteln (133, 134) des zweiten Rahmens (130).

4. Silage-Entnahme-Greifer gemäß den Ansprüchen 2 und 3, wobei die Rahmen-Verbindungsmittel (131, 132) Schnellkopplungsmittel sind.

5. Silage-Entnahme-Greifer gemäß Anspruch 4, wobei die Rahmen-Verbindungsmittel wenigstens einen Bügel (131) mit umgekehrter U-Form und wenigstens eine Öse (132) enthalten.

6. Silage-Entnahme-Vorrichtung, enthaltend einen Hubwagen (10) mit einem Hebearm (14) und einem Silage-Entnahme-Greifer gemäß einem der Ansprüche 1 bis 5.

## Revendications

1. Pince de retrait d'ensilage (100), comprenant :
un cadre principal (110), conçu pour être couplé à un bras de levage d'un engin de levage; un système de transport d'ensilage (120) relié par charnière au cadre principal (110) avec un axe de charnière (124) sensiblement horizontal; **caractérisée en ce que** la pince comprend en outre :
au moins un actionneur de système de transport (125) commandable couplé entre le système de transport d'ensilage (120) et le cadre principal (110) pour commander la position de charnière du système de transport d'ensilage (120) par rapport au cadre principal (110); un support (140) à charnière conçu pour s'actionner conjointement avec le système de transport d'ensilage (120) pour agripper et tenir l'ensilage; où le support (140) est relié par charnière (146) au cadre principal (110), dans une position située au-dessus de l'axe de charnière (124) du système de transport d'ensilage (120); et **en ce que** la pince de retrait d'ensilage (100) comprend en outre au moins un actionneur de support (144, 145) commandable couplé entre le support (140) et le cadre principal (110) pour commander la position de charnière du support (140) par rapport au cadre principal (110).

2. Pince de retrait d'ensilage (100), comprenant :
un cadre principal (110), conçu pour être couplé à un bras de levage d'un engin de levage; un cadre (130) secondaire relié par charnière au cadre principal (110) avec un axe de charnière (124) sensiblement horizontal, pourvu de moyens de couplage de système de transport (133, 134) à coupler avec un système de transport d'ensilage (120A ; 120B) ; **caractérisée en ce que** la pince comprend en outre :
au moins un actionneur de système de transport (125) commandable couplé entre le système de transport d'ensilage (120) et le cadre principal (110) pour commander la position de charnière du cadre (130) secondaire par rapport au cadre principal (110) ;
un système de transport d'ensilage (120A ; 120B), pourvu de moyens de couplage de cadre (131, 132) à coupler aux moyens de couplage de système de transport (133, 134) du cadre (130) secondaire; un support (140) à charnière conçu pour s'actionner conjointement avec le système de transport d'ensilage (120A ; 120B) pour agripper et maintenir l'ensilage; où le support (140) est relié par charnière (146) au cadre principal (110), dans une position située au-dessus de l'axe de charnière (124) du cadre (130) secondaire; et **en ce que** la pince de retrait d'ensilage (100) comprend en outre au moins un actionneur de support (144, 145) commandable couplé entre le support (140) et le cadre principal (110) pour commander la position de charnière du support (140) par rapport au cadre principal (110).

3. Pince de retrait d'ensilage selon la revendication 2, comprenant en outre ;
au moins deux systèmes de transport d'ensilage (120A ; 120B) de type mutuellement différent, chacun étant pourvu de moyens de couplage de cadre (131, 132) à coupler de façon échangeable aux moyens de couplage de système de transport (133, 134) du cadre (130) secondaire.

4. Pince de retrait d'ensilage selon la revendication 2 ou 3, dans laquelle les moyens de couplage de cadre (131, 132) sont des moyens de couplage à libération rapide.

5. Pince de retrait d'ensilage selon la revendication 4, dans laquelle les moyens de couplage de cadre comprennent au moins une fixation (131) avec une forme de U inversé et au moins un oeillet (132).

6. Appareil de retrait d'ensilage, comprenant un engin de levage (10) avec un bras de levage (14) et une pince de retrait d'ensilage selon l'une quelconque des revendications 1 à 5.
